Europäisches Patentamt

(19) European Patent Office

Office européen des brevets

(11) Numéro de publication : **0 311 942 B1**

(12)

# FASCICULE DE BREVET EUROPEEN

(45) Date de publication du fascicule du brevet :
**04.09.91 Bulletin 91/36**

(51) Int. Cl.$^5$ : **C03B 37/025**

(21) Numéro de dépôt : **88116745.6**

(22) Date de dépôt : **10.10.88**

(54) **Procédé de réalisation d'un tube de verre transparent à dopage interne, notamment pour la fabrication de fibres optiques dopées par une terre rare.**

(30) Priorité : **16.10.87 FR 8714286**

(43) Date de publication de la demande :
**19.04.89 Bulletin 89/16**

(45) Mention de la délivrance du brevet :
**04.09.91 Bulletin 91/36**

(84) Etats contractants désignés :
**AT BE CH DE ES FR GB GR IT LI LU NL SE**

(56) Documents cités :
**EP-A- 0 025 230**
**EP-A- 0 026 625**
**EP-A- 0 243 010**
**WO-A-87/01110**

(72) Inventeur : **Le Sergent, Christian**
**20, rue de la Roche Garnier**
**F-91460 Marcoussis (FR)**
Inventeur : **Ramos, Josiane**
**10, rue des Marronniers**
**F-91070 Bondoufle (FR)**
Inventeur : **Barre, Gilles**
**Résidence Le Liers Bâtiment Musset**
**F-91240 Saint Michel sur Orge (FR)**

(74) Mandataire : **Weinmiller, Jürgen et al**
**Lennéstrasse 9 Postfach 24**
**W-8133 Feldafing (DE)**

(73) Titulaire : **ALCATEL ALSTHOM COMPAGNIE GENERALE D'ELECTRICITE**
**54, rue La Boétie**
**F-75382 Paris Cédex 08 (FR)**
Titulaire : **ELECTRICITE DE FRANCE Service National**
**2, rue Louis Murat**
**F-75008 Paris (FR)**

## Description

La présente invention concerne de manière générale le dopage interne d'un tube de verre c'est-à-dire l'incorporation d'un ou plusieurs éléments dopants dans une couche interne du tube, l'adjectif "dopant" désignant ici tout matériau susceptible de modifier localement les caractéristiques du verre. Elle s'applique notamment lorsque on ne veut pas ou ne peut pas inclure préalablement un précurseur volatil d'un tel élément dans un mélange gazeux réactif. Elle répond alors à un besoin qui est actuellement ressenti dans le cadre de la fabrication de fibres optiques. Cette fabrication peut utiliser divers éléments dopants pour modifier localement les caractéristiques optiques d'un tube de verre qu'un retreint à chaud transformera en une préforme dont un étirage à chaud fournira une fibre. Lorsque l'élément dopant utilisé possède un précurseur volatil, ce dernier peut, en général, être facilement inclus dans un mélange gazeux réactif à partir duquel cet élément peut alors être incorporé dans le verre par des méthodes connues. Mais ces méthodes ne sont plus utilisables lorsque l'élément dopant à incorporer ne possède pas de précurseur volatil. Tel est le cas de terres rares telles que le néodyme ou l'erbium. Quant au verre dans lequel l'élément dopant doit être incorporé, c'est de la silice lorsque l'invention est appliquée à la fabrication de fibres optiques.

Dans le domaine technique de la fabrication des fibres optiques les précurseurs des dopants classiques utilisés dans la fabrication des préformes par la méthode connue dite "MCVD" ont des tensions de vapeur de quelques milliers de Pascals dès la température ambiante, ce qui permet, selon un premier procédé connu, de les incorporer par l'intermédiaire d'un gaz porteur barbotant dans un réactif pour constituer ledit mélange gazeux réactif. Les composés des terres rares pouvant être utilisés par la fabrication de fibres optiques destinées à constituer des lasers ou des capteurs, ont par contre des tensions de vapeur très faibles même à des températures voisines de leur point de fusion, par exemple

$NdCl_3$ 3,52 Pascals à 820°C et

$ErCl_3$ 14,84 Pascals à 830°C

Ce premier procédé incluant ledit barbotage n'est alors plus utilisable. Les premières préformes dopées avec des terres rares ont été réalisées suivant un deuxième procédé connu dit de la "chambre à dopant" (voir le document n°1 dont les références sont données en fin de description). Ce procédé ne permet pas d'obtenir, en ce qui concerne l'incorporation de l'élément dopant, une homogénéité longitudinale aussi bonne qu'on le souhaiterait.

Par ailleurs un troisième procédé connu est décrit dans la demande de brevet européen n°0025230 pour l'incorporation de dopants autres que des terres rares. Ce document propose d'incorporer l'élément dopant dans un précurseur dissous dans un porteur liquide, de mélanger ce précurseur et ce porteur liquide à un précurseur de la silice dissous dans un porteur liquide, d'amener ce mélange liquide sous pression par un tube d'amenée en un point d'application déplaçable à l'intérieur d'un tube de verre de départ dans une couche interne duquel l'élément dopant doit être incorporé, d'amener par ailleurs au même point un réactif liquide sous pression propre à réagir chimiquement avec lesdits précurseurs pour former l'élément dopant et de la silice, de pulvériser ensemble ces précurseurs et leurs porteurs liquides avec ce réactif en direction de la surface interne du tube de verre de départ, et de déplacer le point d'application pour balayer cette surface interne, de manière à former à basse température une couche de verre dopée dont les porteurs liquides sont ensuite éliminés par séchage.

Ce troisième procédé connu ne semble pas pratiquement applicable parce que la couche de verre formée contient au moment de sa formation, une telle quantité desdits porteurs liquides que son séchage et sa consolidation ultérieure par chauffage ne permettent pas de lui conférer des qualités optiques acceptables notamment de transparence.

Un quatrième procédé connu dans le même domaine technique comporte diverses opérations, qui sont communes, au moins quant à certaines de leurs finalités, à ce procédé connu et au procédé selon la présente invention, au moins dans un cas typique de mise en oeuvre de ce dernier.

Ces deux procédés partent d'un tube de départ non dopé, ou du moins non dopé par la totalité dudit élément dopant à incorporer.

Lesdites opérations communes sont les suivantes

— réalisation d'un tube de départ constitué de verre et ayant une longueur d'une première à une deuxième extrémités, et une surface intérieure autour d'un espace intérieur,

— réalisation d'une liqueur de dopage liquide constituée par un porteur liquide volatil, et contenant un élément dopant propre à réaliser ledit dopage,

— dépôt dudit élément dopant sous forme liquide par dépôt d'une quantité de ladite liqueur de dopage sur ladite surface intérieure dudit tube de départ, la quantité déposée étant suffisamment faible pour éviter que cette liqueur coule après son dépôt,

— séchage de ladite surface intérieure après ledit dépôt pour évaporer ledit porteur liquide,

2

— dépôt d'une couche de recouvrement en verre sur ladite surface intérieure dudit tube de départ après ledit séchage de cette surface,

— et chauffage-diffusion, cette opération comportant un chauffage dudit tube de départ et de ladite couche de recouvrement après dépôt au moins partiel de celle-ci pour porter ce tube et cette couche à une température de diffusion assurant une diffusion dudit élément dopant dans le verre.

Dans ce quatrième procédé connu ladite opération de dépôt d'une couche de recouvrement se fait à une température telle qu'elle constitue en même temps ladite opération du chauffage diffusion. Quant à ladite opération de dépôt dudit élément dopant, elle est effectuée en deux étapes. Dans la première étape on forme une couche interne poreuse uniforme (une"suie") sur la surface intérieure du tube de départ. Dans la seconde étape on imprègne cette couche poreuse par ladite liqueur de dopage qui est ainsi maintenue de manière uniforme sur toute cette surface. Après le séchage le chauffage transforme cette couche poreuse en une couche de verre contenant l'élément dopant. Ce quatrième procédé connu est décrit dans le document n°2.

Il présente les inconvénients suivants :

L'imprégnation de la couche poreuse nécessite de démonter le tube de départ du tour de verrier sur lequel ce tube a été monté pour des opérations de dépôt antérieures, notamment pour la formation de cette couche poreuse. Ce tube devra être ensuite remonté sur ce tour pour des opérations de dépôt ultérieures ou tout au moins pour l'opération de retreint qui transforme ce tube en une préforme dont pourra être tirée une fibre optique.

Il en résulte un travail délicat et coûteux de démontage et de remontage. Il en résulte surtout un risque de pollution de l'intérieur du tube, notamment par des suies qui se sont déposées à l'aval de celui-ci lors des opérations de dépôt antérieures. Ces suies se sont formées à partir d'un mélange réactif gazeux qui parcourait le tube pour y déposer une couche de verre. Elles sont constituées de particules qui ne se sont pas déposées à l'endroit convenable pour former cette couche de verre et qui ont été entraînées plus loin par le reste du mélange gazeux réactif. Leur réintroduction, même en très faible quantité, dans le tube à l'occasion du démontage et du remontage de celui-ci altère de manière gênante les qualités optiques de la fibre qui sera finalement formée.

La présente invention a notamment pour buts de permettre d'incorporer un élément dopant dans un tube de verre à partir d'une seule extrémité de celui-ci, de permettre de ne pas démonter ce tube lorsqu'il a été préalablement monté sur un tour de verrier, d'éviter le risque de pollution de ce tube à l'occasion de cette incorporation à partir de l'autre extrémité si cette dernière a été antérieurement polluée, de réaliser une distribution longitudinalement homogène de l'élément dopant, et finalement, lorsque ce tube est destiné à être retreint pour constituer une préforme dont sera tirée une fibre optique, d'obtenir de manière économique une fibre présentant de bonnes qualités optiques.

Dans ces buts elle a pour objet un procédé qui, au moins dans ledit cas typique, comporte les opérations communes précédemment mentionnées et qui, par rapport au quatrième procédé connu précédemment décrit, est alors caractérisé par le fait que ladite opération de dépôt dudit élément dopant comporte elle-même les opérations suivantes :

— nébulisation de ladite liqueur de dopage pour la mettre sous forme d'un brouillard de dopage constitué de gouttelettes en suspension dans un gaz porteur,

— mise en place d'un tube d'amenée de brouillard dans ledit espace intérieur dudit tube de départ, ce tube d'amenée de brouillard ayant une extrémité d'entrée extérieure audit tube de départ, pénétrant dans ce tube à ladite première extrémité de celui-ci, et s'étendant jusqu'à une extrémité de sortie dans cet espace intérieur,

— alimentation de ce tube d'amenée de brouillard par sa dite extrémité d'entrée pour qu'il émette ledit brouillard de dopage à sadite extrémité de sortie dans ledit espace intérieur du tube de départ de manière que ledit dépôt dudit élément dopant soit réalisé par le dépôt de gouttelettes de ce brouillard sur ladite surface intérieure,

— et déplacement contrôlé dudit tube d'amenée de brouillard dans ledit tube de départ, ladite alimentation étant maintenue, de manière que ladite extrémité de sortie de ce tube d'amenée de brouillard parcoure la longueur de ce tube de départ, et que ledit dépôt dudit élément dopant soit effectué sur toute ladite surface intérieure de ce dernier.

Selon l'invention il a été trouvé que le dépôt de la liqueur de dopage à partir d'un tel brouillard assurait le maintien d'une répartition macroscopiquement uniforme de cette liqueur sur ladite surface intérieure jusqu'au séchage de cette surface.

Dans le cadre de la présente invention on peut adopter de plus les dispositions parfois préférées suivantes:

— Ladite opération de nébulisation est réalisée à l'extérieur dudit tube de départ et de manière à fournir un brouillard dont la composante liquide est constituée de gouttelettes de diamètres inférieurs à 12 micromètres environ, et plus particulièrement de diamètres compris dans l'intervalle de 1 à 5 micromètres environ.

3

— Lors de ladite mise en place du tube d'amenée de brouillard, ladite extrémité de sortie de celui-ci est placée à ladite deuxième extrémité dudit tube de départ, et ledit déplacement contrôlé de ce tube d'amenée de brouillard fait passer cette extrémité de sortie de cette deuxième à ladite première extrémité du tube de départ.

Cette disposition a pour effet que ledit dépôt de gouttelettes à partir dudit brouillard de dopage s'effectue à chaque instant dans une portion de la longueur de ce tube de départ dans laquelle ce tube d'amenée de brouillard n'est plus présent et ne peut peut donc plus perturber le dépôt, par exemple par contact et balayage de ladite surface intérieure.

— Lesdites opérations de dépôt dudit élément dopant, de séchage de la surface intérieure du tube de départ et de dépôt d'une couche de recouvrement sur cette surface sont effectuées sur un tour de verrier sans enlèvement de ce tube, et cette opération de dépôt dudit élément dopant est complétée par une opération d'enlèvement dudit tube d'amenée de brouillard après ladite opération de déplacement contrôlé pour ne pas gêner ladite opération de dépôt d'une couche de recouvrement.

— Ledit tube d'amenée de brouillard est un tuyau souple de manière qu'on puisse le replier pour pouvoir effectuer lesdites opérations de mise en place, de déplacement contrôlé et d'enlèvement de ce tube dans un espace limité.

— Dans le cas où ledit tube de départ est constitué sur au moins une partie de son épaisseur par un verre de base relativement peu fusible, le procédé comporte en outre une opération préalable de dépôt d'une couche de réception constituée d'un verre plus fusible que ledit verre de base. C'est la surface libre de cette couche qui va constituer ladite surface intérieure. Le verre de ladite couche de recouvrement est alors lui aussi choisi plus fusible que ledit verre de base. Lesdites opérations de dépôt dudit élément dopant et de séchage de ladite surface intérieure sont effectuées entre lesdites opérations de dépôt de ladite couche de réception et de ladite couche de recouvrement. Et lesdites opérations de dépôt de ladite couche de recouvrement et/ou de chauffage diffusion sont effectuées à des températures suffisantes pour assurer la vitrification d'au moins cette couche de recouvrement et la diffusion dudit élément dopant dans cette couche et dans ladite couche de réception. Ces températures sont choisies en même temps suffisamment basses pour conserver la rigidité dudit verre de base. On réalise ainsi une masse vitreuse continue sans déformer le tube de départ.

— Dans un cas habituel de mise en oeuvre de la présente invention, lesdites opérations de dépôt desdites couches de réception et de recouvrement comportent chacune les opérations connues en elles mêmes suivantes : On fait parcourir ledit espace intérieur dudit tube de départ d'une extrémité amont à une extrémité aval de ce tube, par un mélange gazeux réactif propre à réagir lorsqu'il est chauffé à une température de dépôt, en effectuant alors un dépôt de verre qui doit constituer la couche à déposer, et on effectue en même temps au moins une passe de chauffage au cours de laquelle un moyen de chauffage parcourt la longueur dudit tube de départ pour chauffer à chaque instant une portion de cette longueur à ladite température de dépôt et y provoquer ledit dépôt de verre, de manière qu'à la fin de cette passe de chauffage ce dépôt soit réalisé sur toute la longueur de ce tube. Dans ce cas des suies se déposent habituellement à l'aval de ce tube, comme précédemment exposé. C'est pourquoi ladite extrémité amont du tube de départ est alors choisie pour constituer sa dite première extrémité par laquelle pénètre ledit tube d'amenée de brouillard, de manière à éviter que l'introduction de ce tube d'amenée puisse entraîner desdites suies dans ce tube de départ.

— Dans le cas où la présente invention est appliquée à la fabrication de fibres optiques, ledit verre de base est classiquement de la silice, et lesdites couches de réception et de recouvrement sont constituées de verres composites à base de silice. La dite opération de dépôt d'une couche de recouvrement est effectuée comme connu à une température de dépôt atteignant ladite température de diffusion de sorte qu'elle constitue en même temps ladite opération de chauffage diffusion. Quant à ladite opération de séchage elle est effectuée avec chauffage ménagé et progressif à une température de séchage inférieure à ladite température de diffusion de manière à ne pas détériorer la mince couche discontinue d'élément dopant qui résulte de l'évaporation dudit solvant volatil. Ce dernier est en général de l'eau.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence.

Le mode de mise en oeuvre donné à titre d'exemple comporte les dispositions mentionnées ci-dessus comme parfois préférées. Il doit être compris que les éléments mentionnés peuvent être remplacés par d'autres éléments assurant les mêmes fonctions techniques.

La figure 1 représente une vue en élévation d'un tour de verrier sur lequel est monté un dit tube de départ sur la surface intérieure duquel est effectuée une dite opération de dépôt d'élément dopant selon la présente invention.

La figure 2 représente une vue en coupe à échelle agrandie d'un générateur de brouillard représenté sur la figure 1.

La figure 3 représente une vue en élévation du tour de verrier de la figure 1, au cours d'une dite opération de dépôt d'une dite couche de recouvrement dans le même dit tube de départ.

La figure 4 représente une vue en coupe transversale à échelle agrandie d'un secteur angulaire d'un tube dopé obtenu selon la présente invention à partir du même dit tube de départ.

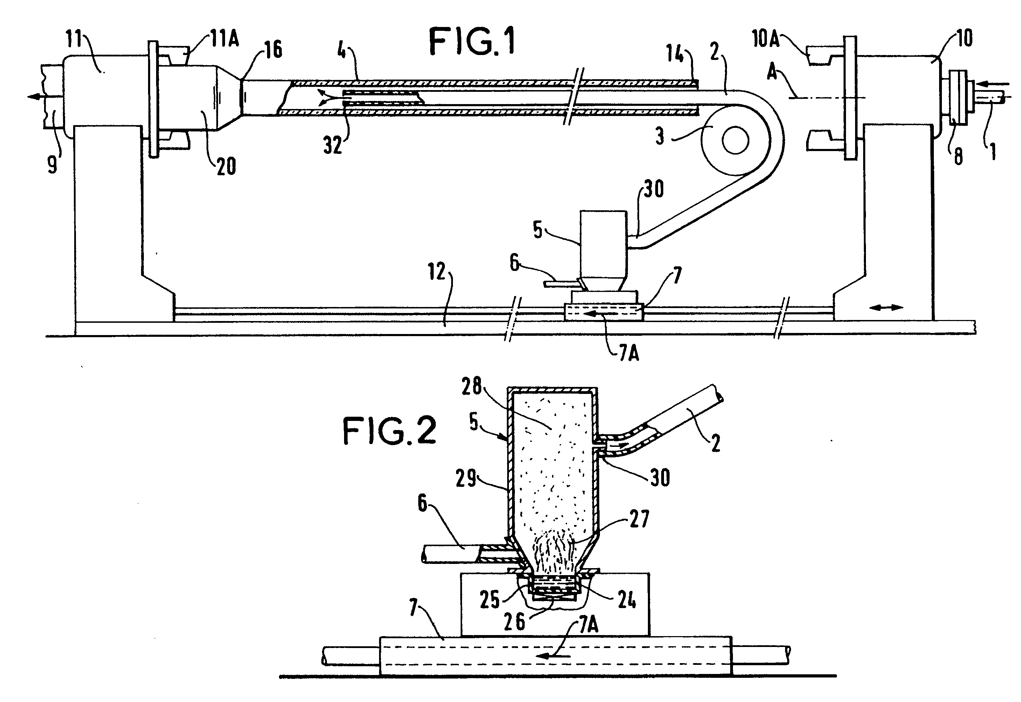

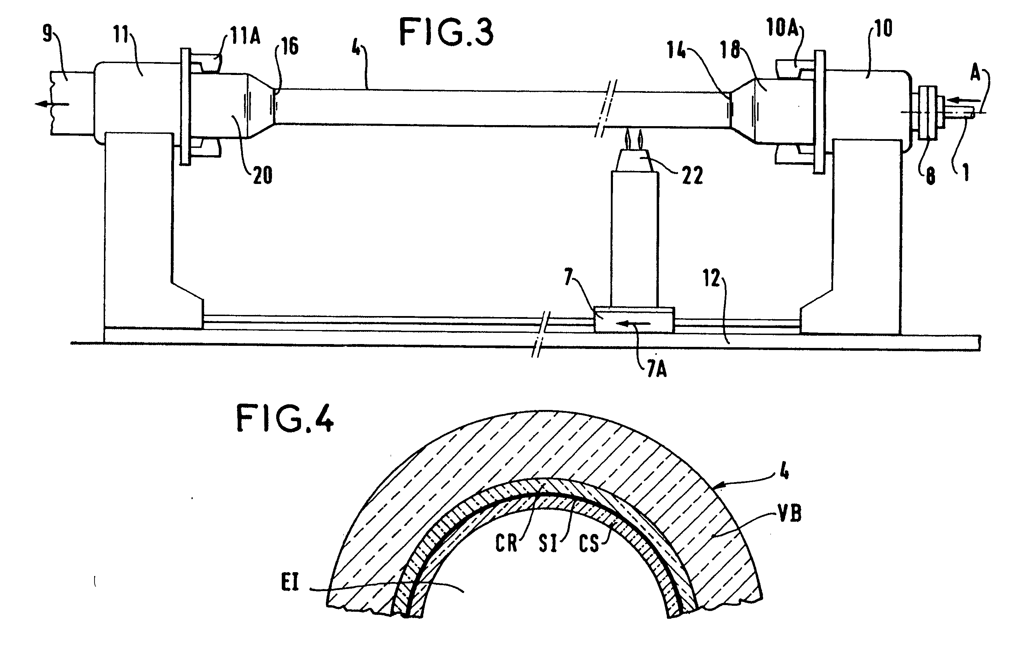

Conformément aux figures 1 et 3 ledit tour de verrier comporte deux poupées amont 10 et aval 11 munies de mors amont et aval 10A et 11A pour maintenir et entraîner en rotation, autour d'un axe horizontal A, un tube de silice tel que 4 qui constitue ledit tube de départ. Ce tube est maintenu par ces mors par l'intermédiaire de manchons de raccordement en silice qui lui sont soudés à ses extrémités amont 14 et aval 16.

Sur la figure 1 le manchon de raccordement amont 18 a été enlevé pour permettre l'introduction dudit tuyau souple d'amenée de brouillard 2 en faisant tourner ce tube autour d'une poulie de renvoi 3.

Il serait cependant possible d'éviter le démontage de ce manchon en faisant passer ce tuyau à travers le joint tournant d'entrée 8, qui permet d'amener lesdits mélanges gazeux réactifs, et à travers la poupée amont 10. Il serait aussi possible, si l'on dispose d'espace, d'utiliser un tube d'amenée de brouillard rigide passant à travers ce joint tournant et cette poupée.

Le tour de verrier comporte aussi une table 12 munie d'un chariot 7 qui se déplace longitudinalement c'est-à-dire parallèlement à l'axe A.

L'arrivée et la sortie desdits mélanges gazeux réactifs sont représentées par des flèches 1 et 9.

Conformément aux figures 1 et 2 ledit brouillard de dopage est introduit dans le tube de départ 4 d'abord à l'extrémité aval 16 de celui-ci, par la sortie 32 du tube d'amenée de brouillard 2. Pour cela l'extrémité d'entrée 30 de celui-ci est alimentée par un générateur de brouillard 5.

Ce générateur comporte une cuve 25 qui contient ladite liqueur de dopage 24 par exemple une solution aqueuse de chlorure de neodyme ou d'erbium. Au fond de cette cuve est disposé un transducteur à ultrasons 26 qui projette des gouttelettes en formant un amas agité appelé geyser 27. La fréquence de ce transducteur est par exemple de 850 kHz et sa puissance de 150 W.

Ledit gaz porteur est introduit en 6 et forme ledit brouillard 28 dans l'enceinte 29 du générateur 5.

Après la mise en place du tube souple d'amenée de brouillard 2 dans le tube de départ 4, ledit déplacement contrôlé est réalisé en fixant le générateur de brouillard 5 sur le chariot 7 qui se déplace selon la flèche 7A pour retirer progressivement le tube 2.

Conformément à la figure 3 ladite opération de dépôt d'une couche de recouvrement CS (voir figure 4) est réalisée en faisant arriver un dit mélange gazeux réactif convenable par l'intermédiaire du joint tournant 8, et en effectuant une passe d'un moyen de chauffage constitué par un chalumeau à oxygène et hydrogène 22. Ce chalumeau est fixé pour cela sur le chariot 7 dont le générateur de brouillard 5 a été enlevé.

D'autres opérations de dépôt de couches de verres sont réalisées de manière analogues après et avant ladite opération de dépôt d'élément dopant. Une telle opération a notamment permis de déposer ladite couche de réception CR.

Cette couche est représentée sur la figure 4 sur laquelle les références VB, SI, et EI désignent ledit verre de base, ladite surface intérieure et ledit espace intérieur.

Le dépôt dudit élément dopant s'effectue sur cette couche de réception qui est suffisamment fusible ou réactive pour incorporer facilement le ou les éléments dopant(s) choisi(s). Ce dépôt est effectué plus précisément comme suit : Quand le dépôt de la couche CR est terminé, le tube de départ 4 est laissé en attente de 15 à 30 mn sous courant d'oxygène à 120l/h. Le tuyau souple 2 constitué de polytétrafluoréthylène est ensuite introduit dans le tube 4, puis retiré à une vitesse déterminée suivant la quantité de dopant à déposer. Les micro-gouttes, dont les diamètres vont de 1 à 5 micromètres, se fixent sur la paroi constituant ladite surface intérieure SI. Ladite opération de séchage, c'est-à-dire ici de déshydratation, s'effectue entre 200 et 600°C par aller et retour du chalumeau 22 tandis qu'un courant d'oxygène et de chlore circule dans le tube 4, le chlore étant majoritaire.

Le procédé selon l'invention convient pour l'incorporation de tout dopant difficile à mettre en phase vapeur mais susceptible d'être mis, au moins sous la forme d'un précurseur, en solution liquide. Il permet la réalisation commode de codopages. Il s'insère dans le procédé habituel de dépôt "MCVD" utilisé pour fabriquer les préformes conventionnelles. Il intervient après le dépôt d'une partie des couches de coeur, voire de gaine dans le cas de fibres unimodales.

Les documents précédemment mentionnés sont les suivants :

Document n°1 :     Poole et al : Fabrication and characterization of low-loss optical fibers
                   Journal of lightwave technology, vol.LT-4, N° 7,July 1986

Document n°2 :     Solution-doping technique for fabrication of rare-earth-doped optical fibres
J.E TOWNSEND
S.B. POOLE
D.N. PAYNE
Electronics letters 26th March 1987 vol.23 N°7.

**Revendications**

1. Procédé de réalisation d'un tube de verre transparent à dopage interne, notamment pour la fabrication de fibres optiques dopées par une terre rare,
ce procédé comportant les opérations suivantes :
— réalisation d'un tube de départ (TD) constitué de verre et ayant une longueur d'une première (14) à une deuxième (16) extrémités, et une surface intérieure (SI) autour d'un espace intérieur (EI),
— réalisation d'une liqueur de dopage liquide (24) constituée par un porteur liquide volatil, et contenant un élément dopant propre à réaliser ledit dopage,
— dépôt dudit élément dopant sous forme liquide par dépôt d'une quantité de ladite liqueur de dopage sur ladite surface intérieure dudit tube de départ, la quantité déposée étant suffisamment faible pour éviter que cette liqueur coule après son dépôt,
— séchage de ladite surface intérieure (SI) après ledit dépôt pour évaporer ledit porteur liquide,
— dépôt d'une couche de recouvrement (CS) en verre sur ladite surface intérieure (SI) dudit tube de départ après ledit séchage de cette surface,
— et chauffage-diffusion, cette opération comportant un chauffage dudit tube de départ et de ladite couche de recouvrement après dépôt au moins partiel de celle-ci pour porter ce tube et cette couche à une température de diffusion assurant une diffusion dudit élément dopant dans le verre,
ce procédé étant caractérisé par le fait que ladite opération de dépôt dudit élément dopant comporte elle-même les opérations suivantes :
— nébulisation de ladite liqueur de dopage (24) pour la mettre sous forme d'un brouillard de dopage (28) constitué de gouttelettes en suspension dans un gaz porteur,
— mise en place d'un tube d'amenée de brouillard (2) dans ledit espace intérieur (EI) dudit tube départ (4), ce tube d'amenée de brouillard ayant une extrémité d'entrée (30) extérieure audit tube de départ (4), pénétrant dans ce tube à ladite première extrémité (14) de celui-ci, et s'étendant jusqu'à une extrémité de sortie (32) située dans cet espace intérieur,
— alimentation de ce tube d'amenée de brouillard (2) par sa dite extrémité d'entrée (30) pour qu'il émette ledit brouillard de dopage à sa dite extrémité de sortie (32) dans ledit espace intérieur (EI) du tube de départ (4) de manière que ledit dépôt dudit élément dopant soit réalisé par le dépôt de gouttelettes de ce brouillard sur ladite surface intérieure (SI),
— et déplacement contrôlé dudit tube d'amenée de brouillard (2) dans ledit tube de départ (4), ladite alimentation étant maintenue, de manière que ladite extrémité de sortie (32) de ce tube d'amenée de brouillard parcoure la longueur de ce tube de départ, et que ledit dépôt dudit élément dopant soit effectué sur toute ladite surface intérieure de ce dernier.

2. Procédé selon la revendication 1, caractérisé par le fait que ladite opération de nébulisation est réalisée à l'extérieur dudit tube de départ (4) et de manière à fournir un brouillard dont la composante liquide est constituée de gouttelettes de diamètres inférieurs à 12 micromètres environ.

3. Procédé selon la revendication 1, caractérisé par le fait que lesdites gouttelettes ont des diamètres répartis sensiblement dans l'intervalle de 1 à 5 micromètres.

4. Procédé selon la revendication 1, caractérisé par le fait que lors de ladite mise en place du tube d'amenée de brouillard (2), ladite extrémité de sortie (32) de celui-ci est placée à ladite deuxième extrémité (16) dudit tube de départ (4),
— ledit déplacement contrôlé de ce tube d'amenée de brouillard (2) faisant passer cette extrémité de sortie (32) de cette deuxième (16) à ladite première (14) extrémité du tube de départ, de manière que ledit dépôt de gouttelettes à partir dudit brouillard de dopage s'effectue à chaque instant dans une portion de la longueur de ce tube de départ dans laquelle ce tube d'amenée de brouillard n'est plus présent.

5. Procédé selon la revendication 4, caractérisé par le fait que lesdites opérations de dépôt dudit élément dopant, de séchage de la surface intérieure (SI) du tube de départ (4) et de dépôt d'une couche de recouvrement (CS) sur cette surface sont effectuées sur un tour de verrier (10, 11, 12) sans enlèvement de ce tube,
—cette opération de dépôt dudit élément étant complétée par une opération d'enlèvement dudit tube d'amenée de brouillard (2) après ladite opération de déplacement contrôlé pour ne pas gêner ladite opération de dépôt d'une couche de recouvrement (CS).

6. Procédé selon la revendication 5, caractérisé par le fait que ledit tube d'amenée de brouillard (2) est un tuyau souple de manière à permettre d'effectuer lesdites opérations de mise en place de déplacement contrôlé et d'enlèvement de ce tube dans un espace limité.

7. Procédé selon la revendication 5, procédé dans lequel ledit tube de départ (4) est constitué sur au moins une partie de son épaisseur par un verre de base (VB),

— ce procédé comportant en outre une opération préalable de dépôt d'une couche de réception (CR) pour former ladite surface intérieure (SI), cette couche étant constituée d'un verre plus fusible que ledit verre de base,

— le verre de ladite couche de recouvrement (CS) étant lui aussi plus fusible que ledit verre de base,

— lesdites opérations de dépôt dudit élément dopant et de séchage de ladite surface intérieure étant effectuées entre lesdites opérations de dépôt de ladite couche de réception et de ladite couche de recouvrement (CS),

— lesdites opérations de dépôt de ladite couche de recouvrement (CS) et/ou de chauffage diffusion étant effectuées à des températures suffisantes pour assurer la vitrification d'au moins cette couche de recouvrement et la diffusion dudit élément dopant dans cette couche et dans ladite couche de réception, ces températures étant en même temps suffisamment basses pour conserver la rigidité dudit verre de base (VB).

8. Procédé selon la revendication 7, dans lequel lesdites opérations de dépôt desdites couches de réception (CR) et de recouvrement (CS) comportent chacune les opérations suivantes

— on fait parcourir ledit espace intérieur (EI) dudit tube de départ (4), d'une extrémité amont (14) à une extrémité aval (16) de ce tube, par un mélange gazeux réactif propre à réagir lorsqu'il est chauffé à une température de dépôt, en effectuant alors un dépôt de verre qui doit constituer la couche à déposer,

— et on effectue en même temps au moins une passe de chauffage au cours de laquelle un moyen de chauffage (22) parcourt la longueur dudit tube de départ (4) pour chauffer à chaque instant une portion de cette longueur à ladite température de dépôt et y provoquer ledit dépôt de verre, de manière qu'à la fin de cette passe de chauffage ce dépôt soit réalisé sur toute la longueur de ce tube, de telle sorte que des suies peuvent se déposer à l'aval de ce tube, ces suies étant constituées de particules qui résultent dudit chauffage dudit mélange gazeux réactif, qui n'ont pas été déposées sur la longueur de ce tube non dopé, et qui ont été entraînées par le reste de ce mélange gazeux réactif,

— procédé dans lequel ladite extrémité amont du tube de départ constitue sa dite première extrémité (14) par laquelle pénétre ledit tube d'amenée de brouillard (2), de manière à éviter que l'introduction de ce tube d'amenée puisse entraîner desdites suies dans ce tube de départ.

9. Procédé selon la revendication 8, dans lequel ledit verre de base (VB) est de la silice, et lesdites couches de réception (CR) et de recouvrement (CS) sont constituées de verres composites à base de silice.

10. Procédé selon la revendication 9, dans lequel ladite opération de dépôt d'une couche de recouvrement (CS) est effectuée à une température de dépôt atteignant ladite température de diffusion de sorte qu'elle constitue en même temps ladite opération de chauffage diffusion.

11. Procédé selon la revendication 1, dans lequel ladite opération de séchage est effectuée avec chauffage à une température de séchage inférieure à ladite température de diffusion.


**Patentansprüche**

1. Verfahren zur Herstellung eines transparenten Glasrohrs mit Innendotierung, insbesondere für die Herstellung von Lichtleitfasern, die mit einer seltenen Erde dotiert sind, wobei das Verfahren folgende Arbeitsgänge aufweist :

— Herstellung eines Ausgangsrohrs (TD) aus Glas mit einer von einem ersten (14) bis zu einem zweiten Ende (16) reichenden Länge und einer um einen Innenraum (EI) verlaufenden Innenoberfläche (SI),

— Herstellung einer Dotierflüssigkeit (24) aus einem flüchtigen flüssigen Träger und einem zum Dotieren geeigneten Dotierelement,

— Aufbringen des Dotierelements in flüssiger Form durch Auftragen einer Menge der Dotierflüssigkeit auf die Innenoberfläche des Ausgangsrohrs, wobei die aufgetragene Menge genügend gering ist, um das Fließen der Lösung nach dem Auftragen zu vermeiden,

— Trocknen der Innenoberfläche (SI) nach dem Auftragen, wobei der flüssige Träger verdampft,

— Aufbringen einer Deckschicht (CS) aus Glas auf die Innenoberfläche (SI) des Ausgangsrohrs nach dem Trocknen dieser Oberfläche,

— und Erwärmen-Diffundieren, wobei dieser Arbeitsgang ein Erwärmen des Ausgangsrohrs und der Deckschicht nach deren mindestens partiellem Auftragen, wodurch das Rohr und die Schicht auf eine Diffusionstemperatur gebracht werden, die ein Diffundieren des Dotierelements in das Glas bewirkt, dadurch gekennzeichnet, daß der Arbeitsgang des Auftragens des Dotierelements seinerseits folgende Schritte aufweist :

— Zerstäuben der Dotierflüssigkeit (24), um sie in einen Dotiernebel (28) aus Tröpfchen zu überführen, die in einem Trägergas suspendiert sind,

— Anordnen eines Nebelzuführungsrohrs (2) im Innenraum (EI) des Ausgangsrohrs (4), wobei das Nebelzuführungsrohr mit einem Eintrittsende (30) außerhalb des Ausgangsrohrs (4) liegt, in dieses Rohr vom ersten Ende (14) her eindringt und sich bis an ein im Innenraum gelegenes Austrittsende (32) erstreckt,

— Beschicken des Nebelzuführungsrohrs (2) durch sein Eintrittsende (30), damit es den Dotiernebel an seinem Austrittsende (32) in den Innenraum (EI) des Ausgangsrohrs (4) entläßt, derart, daß der Auftrag des Dotierelements durch Niederschlagen der Nebeltröpfchen auf der Innenoberfläche (SI) bewirkt wird,

— und kontrolliertes Verschieben des Nebelzuführungsrohrs (2) im Ausgangsrohr (4), wobei die Beschickung aufrechterhalten wird, derart, daß das Austrittsende (32) des Nebelzuführungsrohrs die Länge des Ausgangsrohrs durchfährt, und daß das Niederschlagen des Dotierelements auf der gesamten Innenoberfläche des Rohres erfolgt.

2. Verfahren nach Anspruch 1, dadurch gekennzeichnet, daß die Zerstäubung außerhalb des Ausgangsrohrs (4) erfolgt, derart, daß ein Nebel erzeugt wird, dessen flüssiger Bestandteil aus Tröpfchen mit Durchmessern unter ca. 12 Mikrometer besteht.

3. Verfahren nach Anspruch 1, dadurch gekennzeichnet, daß die Tröpfchen Durchmesser besitzen, die im wesentlichen im Bereich von 1 bis 5 Mikrometern liegen.

4. Verfahren nach Anspruch 1, dadurch gekennzeichnet, daß beim Anordnen des Nebelzuführungsrohrs (2) das Austrittsende (32) desselben am zweiten Ende (16) des Ausgangsrohrs (4) plaziert wird,

— wobei die kontrollierte Verschiebung des Nebelzuführungsrohrs (2) darin besteht, das Ausgangsende (32) des Nebelzuführungsrohrs vom zweiten Ende (16) zum ersten Ende (14) des Ausgangsrohrs hin zu bewegen, derart, daß das Niederschlagen der Tröpfchen aus dem Dotiernebel zu jedem Zeitpunkt in einem Längsabschnitt des Ausgangsrohrs erfolgt, in dem sich das Nebelzuführungsrohr nicht mehr befindet.

5. Verfahren nach Anspruch 4, dadurch gekennzeichnet, daß die Arbeitsgänge des Auftragens der Dotierelemente, des Trocknens der Innenoberfläche (SI) des Ausgangsrohrs (4) und des Auftragens einer Deckschicht (CS) auf dieser Oberfläche auf einer Glasdrehbank (10, 11, 12) ohne Beseitigen des Entnahme erfolgen,

— und wobei der Arbeitsgang des Aufbringens des Dotierelements nach der kontrollierten Verschiebung durch Entfernen des Nebelzuführungsrohrs (21) abgeschlossen wird, um das Auftragen einer Deckschicht nicht zu behindern.

6. Verfahren nach Anspruch 5, dadurch gekennzeichnet, daß das Nebelzuführungsrohr (2) ein biegsames Rohr ist, um das Anordnen, das kontrollierte Verschieben und das Beseitigen des Rohrs in einem begrenzten Raum zu ermöglichen.

7. Verfahren nach Anspruch 5, bei dem das Ausgangsrohr (4) über mindestens einen Teil seiner Dicke aus einem Basisglas (VB) besteht,

— wobei das Verfahren weiter einen vorbereitenden Arbeitsgang des Auftragens einer Empfangsschicht (CR) zur Bildung der genannten Innenoberfläche (SI) aufweist, und diese Schicht aus einem leichter als das Basisglas schmelzbaren Glas besteht,

— das Glas der Deckschicht (CS) ebenfalls leichter schmelzbar ist als das Basisglas, wobei das Aufbringen des Dotierelements und das Trocknen der Innenoberfläche zwischen dem Aufbringen der Empfangsschicht und dem Aufbringen der Deckschicht (CS) durchgeführt werden,

— und die Arbeitsgänge des Auftragens der Deckschicht (CS) und/oder der Diffusionserwärmung bei Temperaturen erfolgen, die für die Vitrifizierung mindestens der Deckschicht und die Diffusion des Dotierelements in dieser Schicht ausreichen, wobei diese Temperaturen gleichzeitig genügend niedrig sind, um die Steifigkeit des Basisglases (VB) zu erhalten.

8. Verfahren nach Anspruch 7, bei dem die Arbeitsgänge des Auftragens der Empfangsschicht (CR) und der Deckschicht (CS) jeweils folgende Schritte aufweisen :

— man läßt den Innenraum (EI) des Ausgangsrohrs (4) ab einem stromaufwärts gelegenen Ende (14) bis zu einem stromabwärts gelegenen Ende (16) von einem Reaktionsgasgemisch durchströmen, das nach Erwärmen auf eine Beschichtungstemperatur reagiert und dann einen Glasniederschlag bildet, der die aufzubringende Schicht darstellt,

— und man führt gleichzeitig mindestens einen Erwärmungsdurchlauf durch, bei dem eine Heizvorrichtung (22) die Länge des Ausgangsrohrs (4) überstreicht, um in jedem Zeitpunkt einen Abschnitt dieser Länge auf die Beschichtungstemperatur zu bringen und den Glasniederschlag zu bewirken, derart, daß am Ende des Erwärmungsdurchlaufs der Niederschlag auf der gesamten Länge des Rohrs erfolgt, und daß sich der Rußschleier stromabwärts in dem Rohr absetzt, wobei der Schleier aus Teilchen besteht, die aus der Erwärmung des Reaktionsgasgemisches hervorgehen, nicht über die Länge des nicht dotierten Rohrs abgeschieden, und vom Rest des Reaktionsgasgemisches mitgenommen worden sind,

— wobei das Verfahren von einer Art ist, bei der das stromaufwärts gelegene Ende des Ausgangsrohrs sein erstes Ende (14) bildet, durch das das Nebelzuführungsrohr (2) eindringt, so daß verhindert wird, daß das Einführen des Zuführungsrohrs zur Mitnahme des Rußes in das Ausgangsrohr führt.

9. Verfahren nach Anspruch 8, bei dem das Basisglas (VB) aus Siliziumoxid besteht, und daß die Empfangsschicht (CR) und die Deckschicht (CS) aus zusammengesetzten Gläsern auf Siliziumoxidbasis bestehen.

10. Verfahren nach Anspruch 9, bei dem der Arbeitsgang des Aufbringens einer Deckschicht (CS) bei einer Beschichtungstemperatur erfolgt, welche die Diffusionstemperatur erreicht, so daß dieser Arbeitsgang zugleich den Arbeitsgang der Diffusionserwärmung bildet.

11. Verfahren nach Anspruch 1, bei dem die Trocknung durch Erwärmen auf eine Trocknungstemperatur erfolgt, die niedriger als die Diffusionstemperatur ist.

## Claims

1. A method of making an internally doped tube of transparent glass, in particular for manufacturing optical fibers doped with a rare earth, said method comprising the following operations :

— making a tube blank (TD) constituted by glass and having a length between a first end (14) and a second end (16), and having an inside surface (SI) about an inside space (EI) ;

— making a liquid doping liquor (24) constituted by a volatile carrier liquid and containing a dopant suitable for performing said doping ;

— depositing said dopant in liquid form by depositing a quantity of said doping liquor on the inside surface of said tube blank, with the quantity deposited being small enough to prevent said liquor from running after being deposited ;

— drying said inside surface (SI) after depositing said dopant by evaporating said liquid carrier ;

— depositing a covering layer (CS) of glass on said inside surface of said tube blank after said operation of drying said surface ; and

— heating-diffusion, said operation comprising heating said tube blank and said covering layer after said layer has been deposited at least partially in order to raise said tube and said layer to a diffusion temperature for diffusing said dopant into the glass ;

said method being characterized by the fact that said operation of depositing said dopant itself comprises the following operations :

— making a mist of said doping liquor (24) in order to obtain a doping mist (28) constituted by droplets in suspension in a carrier gas ;

— placing a mist delivery tube (2) in said inside space (EI) of said tube blank (4), said mist delivery tube having an inlet end (30) outside said tube blank (4), penetrating into said tube from said first end (14) thereof, and extending up to an outlet end (32) situated in said inside space ;

— feeding said mist delivery tube (2) via said inlet end (30) thereof to cause it to emit said doping mist from said outlet end (32) thereof in said inside space (EI) of the tube blank (4) in such a manner that said dopant is deposited by depositing droplets of said mist on said inside surface (SI) ; and

— displacing said mist delivery tube (2) in controlled manner inside said tube blank (4) tile maintaining said feed in such a manner that said outlet end (32) from said mist delivery pipe runs along the length of said starting tube, and said dopant is deposited over the entire inside surface thereof.

2. A method according to claim 1, characterized by the fact that said operation of making a mist is performed outside said tube blank (4) in such a manner as to provide a mist whose liquid component is constituted by droplets whose diameters are less than about 12 micrometers.

3. A method according to claim 2, characterized by the fact that said droplets have diameters lying substantially in the range 1 micrometer to 5 micrometers.

4. A method according to claim 1, characterized by the fact that when said mist delivery tube (2) is put into place, said outlet end (32) thereof is placed at said second end (16) of said tube blank (4) ;

— said controlled displacement of said mist delivery tube (2) causes said outlet end (32) to pass from said second end (16) to said first end (14) of the tube blank, in such a manner that said droplets are deposited from said doping mist at all times in a portion of the length of said tube blank in which said mist delivery tube is no longer present.

5. A method according to claim 4, characterized by the fact that said operations of depositing said dopant,

9

of drying the inside surface (SI) of the tube blank (4), and of depositing a covering layer (CS) on said surface are performed on a glass-makers' lathe (10, 11, 12) without removing the tube blank,

— said operation of depositing said dopant including an additional operation of removing said mist delivery tube (2) after said controlled displacement operation in order to avoid interferring with said operation of depositing a covering layer (CS).

6. A method according to claim 5, characterized by the fact that said mist delivery tube (2) is a flexible pipe, thereby enabling said operations of putting said pipe into place, of displacing it in controlled manner, and of removing it to be performed in a limited space.

7. A method according to claim 5, wherein said tube blank (4) is constituted, over at least a portion of its thickness, by a base glass (VB) ;

— said method further including a prior operation of depositing a reception layer (CR) for forming said inside surface (SI), said layer being constituted by a glass which is more easily melted than said base glass ;

— the glass of said covering layer (CS) being likewise more easily melted than said base glass ;

— said operations of depositing said dopant and of drying said inside surface being performed between said operations of depositing said reception layer and of depositing said covering layer (CS) ; and

— said operations of depositing said covering layer (CS) and/or of heating-diffusion being performed at temperatures which are high enough to vitrify at least said covering layer and to cause said dopant to diffuse in said layer and in said reception layer, said temperatures being simultaneously low enough to conserve the rigidity of said base glass (VB).

8. A method according to claim 7, wherein said operations of depositing said reception layer (CR) and of depositing said covering layer (CS) each comprise the following operations :

— a mixture of reaction gases suitable for reacting when heated to a deposition temperature is caused to run along said inside space (CI) of said tube blank (4) from an upstream end (14) to a downstream end (16) thereof, with a glass deposit then being formed to constitute said layer to be deposited ; and

— simultaneously, at least one heating pass is performed during which heating means (22) runs along the length of said tube blank (4) in order to heat, at each instant, a portion of said length to a deposition temperature and cause said glass deposit to take place in said portion, such that at the end of said heating pass said deposit has been formed over the entire length of said tube, so that soot may be deposited downstream from said tube, said soot being constituted by particles which results from said heating of said mixture of reaction gases and which have not been deposited on the length of said non-doped tube, and which have been entrained by the remainder of said mixture of reaction gases ;

— said method being characterized by the fact that said upstream end of the tube blank constitutes said first end (14) thereof via which said mist delivery tube (2) penetrates into the tube, thus ensuring that insertion of the delivery pipe cannot entrain said soot into said tube blank.

9. A method according to claim 8, wherein said base glass (VB) is silica, and said reception and covering layers (CR, CS) are constituted by silica-based composite glasses.

10. A method according to claim 9, wherein said operation of depositing a covering layer (CS) is performed at a deposition temperature which reaches said diffusion temperature such that said operation simultaneously constitutes said operation of heating-diffusion.

11. A method according to claim 1, wherein said drying operation is performed at a drying temperature which is less than said diffusion temperature.

FIG.1

FIG.2

EP 0 311 942 B1

# FIG.3

# FIG.4

EP 0 311 942 B1